(19)

**Europäisches Patentamt**
**European Patent Office**
**Office européen des brevets**

(11) **EP 4 707 879 A1**

(12) **EUROPEAN PATENT APPLICATION**

(43) Date of publication:
**11.03.2026 Bulletin 2026/11**

(21) Application number: **25200250.6**

(22) Date of filing: **04.09.2025**

(51) International Patent Classification (IPC):
$G02B\ 3/02^{(2006.01)}$ $\quad$ $G02B\ 27/09^{(2006.01)}$
$G02B\ 19/00^{(2006.01)}$ $\quad$ $F21V\ 5/04^{(2006.01)}$
$G02B\ 3/08^{(2006.01)}$

(52) Cooperative Patent Classification (CPC):
**G02B 3/02; F21V 5/04; G02B 19/0047;**
**G02B 27/0955;** G02B 3/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.09.2024 US 202463691113 P**

(71) Applicant: **Stryker Corporation**
**Portage, MI 49002 (US)**

(72) Inventors:
- **STEAD, Robert Anthony**
  **Portage Michigan 49002 (US)**
- **ERISMANN, Fernando**
  **Portage Michigan 49002 (US)**

(74) Representative: **V.O.**
**P.O. Box 87930**
**2508 DH Den Haag (NL)**

(54) **ASPHERIC LENSES AND OPTICAL ASSEMBLIES FOR GENERATING UNIFORM RECTANGULAR IRRADIANCE DISTRIBUTIONS**

(57) A lens assembly comprising one or more lenses is provided. The one or more lenses together comprise a first surface and a second surface. An optical axis of the lens assembly extends in the z-direction. The first surface comprises a first cross-section in a *y-z* plane, wherein the first cross-section comprises an aspheric first curve that varies in the *y-z* plane, wherein the first aspheric curve is non-circular, non-elliptical, and non-conical. One surface selected from the first surface and the second surface comprises a second cross-section in a x-z plane, wherein the second cross-section comprises an aspheric second curve in the x-z plane, wherein the second first aspheric curve is non-circular, non-elliptical, and non-conical.

**Description**

**CROSS-REFERENCE TO RELATED APPLICATION**

This application claims the benefit of U.S. Provisional Application No. 63/691,113, filed September 5, 2024, the entire contents of which are hereby incorporated by reference herein.

**FIELD**

This is directed generally towards lenses, and more specifically towards aspheric lenses that create a uniform rectangular distribution of light.

**BACKGROUND**

Optical techniques to create uniform circular distributions of light are known. For example, rotationally symmetric lenses may be used to transform a point source into a uniform circular distribution of light, wherein the uniform circular distribution is incident on an illumination plane. In surgical applications, circular distributions of light are used to illuminate tissue or other objects for imaging.

**SUMMARY**

As noted above, techniques for creating uniform circular distributions of light are known. In particular, these techniques use rotationally symmetric lenses to generate uniform circular distributions. In surgical applications, circular distributions of light may be used to illuminate tissue or other objects for imaging.

However, uniform circular distributions of light are not ideal for all applications, and have particular disadvantages when used in surgical imaging applications, including open-field surgical imaging applications. In surgical imaging/video applications in which imaging or video capture are to be performed using a rectangular field of view, illuminating the rectangular field of view with a circular distribution of light requires that the circular distribution be substantially larger than the intended rectangular field of view. This means that light must be "wasted" by being directed to outside the intended field of view, requiring that a higher power light source must be used in order to achieve sufficient intensity across the rectangular field of view. Furthermore, light being incident outside the intended field of view may have disadvantageous effects, such as creation of unwanted "background" illumination or the creation of harmful or unintended optical interactions with tissue, fluorophores, or other objects falling outside the intended imaging field of view, or excessive heating of tissue or of the imaging device.

Additionally, known techniques for generating uniform distributions of light rely on point-sources of light that have very narrow spatial distributions and very narrow spectral distributions. These known techniques are therefore not flexible for adaptation across different light sources, including spatially distributed, incoherent, and/or broadband light sources.

Thus, there is a need for improved systems and methods for providing illumination to regions to be imaged in surgical imaging/video applications in which a rectangular field of view is desired. There is a need for improved optical systems that transform input light into a uniform rectangular field of view in a simple, reliable, affordable, compact, and durable manner. Particularly, there is a need for systems and methods that provide uniform rectangular distributions of light to be incident on a rectangular imaging field of view, such that light is not (or is minimally) incident outside the intended field of view, allowing for use of lower power light sources to achieve sufficient illumination of a rectangular field of view. Furthermore, there is a need for such systems and methods that are flexible for adaptation across different light sources, including spatially distributed, incoherent, and/or broadband light sources. Disclosed herein are systems and methods that may address one or more of the above identified needs.

Disclosed herein are lens assemblies and optical systems that use aspheric lenses to transform light incident on the lens into a uniform rectangular distribution. An optical system may include a light source and an aspheric lens. The light source may be a light source having a spatial distribution and a spectral distribution (e.g., a broadband light source). Light generated by the light source may be incident on the aspheric lens and may be refracted by the lens to create a uniform rectangular distribution of light that is incident on an illumination plane normal to the optical axis of the optical system.

The aspheric lens may include one or more aspheric surfaces. As used herein, the z axis of an aspheric lens surface (comprising one or more aspheric curves) may define the optical axis of the lens, and the positive z direction may be the direction in which light propagates from the point source through the lens and towards the illumination plane.

The one or more aspheric surfaces provided on the aspheric lens may include a first aspheric curve in the *y-z* plane, and a second aspheric curve in the *x-z* plane. The first and second aspheric curves may have different shapes, for example by having different curvatures such that the first curvature is tighter than the second curvature, and such that the first aspheric curve has a greater surface sag than the second aspheric curve. By providing an aspheric lens that includes two aspheric curves having two different curvatures, wherein the two aspheric curves are defined in planes that intersect the optical axis and are perpendicular to one another, the aspheric lens may generate a rectangular distribution of light that has a relatively uniform intensity distribution across a rectangular shape in the illumination plane.

In some examples, the first aspheric curve and second aspheric curve may be provided as part of a single aspheric convex surface of the lens, where the first aspheric curve and second aspheric curve are defined in mutually perpendicular cross-sections of a single lens surface. The single lens surface including both the first and second aspheric curves may, for example, include the first curve in a (e.g., vertical) cross-section intersecting its optical axis and the second curve in a (e.g., horizontal) cross-section intersecting its optical axis. The single lens surface may comprise a smooth rotational transition between the first curve and the second curve that defines a smooth convex lens surface. In some examples, the opposite surface (opposite the single lens surface that includes both the first and second aspheric curves) may be a planar surface.

In some examples, the first aspheric curve and second aspheric curve may be provided as parts of different respective convex surfaces of the lens. For example, the first curve may be formed on a first surface on a first side of the lens, and the second curve may be formed on a second surface on the second side of the lens. The two surfaces may each be convex surfaces that are opposite one another on a single lens, and which have different curvatures that are defined in planes that are mutually perpendicular to one another. In some examples, the first and/or second surfaces opposite one another may have geometries that are defined (at least in part) by extrusion of a curve in a dimension perpendicular to the curve. The first surface, for example, may be defined by a translation (over at least a part of the first surface) of the first curve in the $x$ direction, and the second surface may be defined by a translation (over at least a part of the second surface) of the second curve in the y direction.

In some examples, a lens assembly comprising one or more lenses is provided, wherein the one or more lenses together comprise a first surface and a second surface, wherein an optical axis of the lens assembly extends in the $z$-direction; the first surface comprises a first cross-section in a $y$-$z$ plane, wherein the first cross-section comprises an aspheric first curve that varies in the $y$-$z$ plane, wherein the first aspheric curve is non-circular, non-elliptical, and non-conical; and one surface selected from the first surface and the second surface comprises a second cross-section in a $x$-$z$ plane, wherein the second cross-section comprises an aspheric second curve in the $x$-$z$ plane, wherein the second first aspheric curve is non-circular, non-elliptical, and non-conical.

In some examples, the first surface is entirely convex along the first curve.

In some examples, the one surface selected from the first surface and the second surface is entirely convex along the first curve.

In some examples, the one surface is the first surface.

In some examples, the first curve, the second curve, and the optical axis intersect at a common point on the first surface.

In some examples, the first surface comprises a smooth rotational transition about the optical axis between the first curve and the second curve.

In some examples, the one surface is the second surface.

In some examples: the first curve is convex in a first $z$-axis direction extending away from the second surface; and the second curve is convex in a second $z$-axis direction, opposite the first $z$-axis direction, extending away from the first surface.

In some examples, the first surface comprises an extruded geometry defined by translation of the first curve in the x direction.

In some examples, the second surface comprises an extruded geometry defined by translation of the second curve in the y direction.

In some examples, the first curve has a first curvature and the second curve has a second curvature, wherein the first curvature is tighter than the second curvature.

In some examples, the first curve has a first surface sag and the second curve has a second surface sag, wherein the first surface sag is larger than the second surface sag.

In some examples: the first curve is continuous between its outer bounds in the $y$ axis direction; and the second curve is continuous between its outer bounds in the $x$ axis direction.

In some examples, the first curve is a discontinuous curve comprising a first plurality of continuous curve portions separated by a first plurality of discontinuities, such that the first surface forms a Fresnel surface.

In some examples: the one surface is the first surface; the second curve is a discontinuous curve comprising a second plurality of continuous curve portions separated by a second plurality of discontinuities; and the first surface comprises a plurality of Fresnelized pixels.

In some examples: the first curve comprises a first plurality of Fresnelized ridges; the one surface is the second surface; the second curve is a discontinuous curve comprising a second plurality of continuous curve portions separated by a second plurality of discontinuities; and the second curve comprises a second plurality of Fresnelized ridges.

In some examples, an optical assembly is provided, the optical assembly comprising: the lens assembly of claim 1; and an illumination light source arranged on the optical axis of the lens assembly, wherein the illumination light source provides illumination light incident on and through the optical assembly, wherein the illumination light from the illumination light source passing through the lens assembly is shaped into a rectangular distribution in an illumination plane normal to the optical axis, the rectangular distribution having a length in the $y$-axis direction and width in the x-axis direction, wherein the length is greater than the width.

In some examples of the optical assembly: the rectangular distribution has a $y$-axis intensity distribution that varies by less than or equal to 50% of a minimum intensity value of the y-axis intensity distribution between outer edges of the rectangular distribution in the $y$-axis direction, and the rectangular distribution has an $x$-axis intensity distribution that varies by less than or equal to 50% of a minimum intensity value of the y-axis intensity distribution between outer edges of the rectangular distribution in the $x$-axis direction.

In some examples of the optical assembly: the rectangular distribution has a $y$-axis intensity distribution that varies by less than or equal to 34% of a maximum intensity value of the y-axis intensity distribution between outer edges of the rectangular distribution in the $y$-axis direction, and the rectangular distribution has an $x$-axis intensity distribution that varies by less than or equal to 34% of a maximum intensity value of the y-axis intensity distribution between outer edges of the rectangular distribution in the $x$-axis direction.

In some examples of the optical assembly, a standard deviation of irradiance of pixels within the rectangular distribution is less than or equal to 2E-03.

It will be appreciated that any of the variations, examples, features, and options described in view of the systems apply equally to the methods and vice versa. It will also be clear that any one or more of the above variations, examples, features, and options can be combined.

## BRIEF DESCRIPTION OF THE FIGURES

The invention will now be described, by way of example only, with reference to the accompanying drawings, in which:

FIG. 1 depicts an optical system comprising an aspheric lens that generates a rectangular intensity distribution of light in an illumination plane, according to some examples;

FIGS. 2A-2D depict an aspheric lens that generates a rectangular intensity distribution of light in an illumination plane, wherein the aspheric lens comprises an aspheric surface comprising two perpendicular aspheric curves on a single side of the aspheric lens, according to some examples;

FIGS. 3A(i)-3D depict an aspheric lens that generates a rectangular intensity distribution of light in an illumination plane, wherein the aspheric lens comprises a first aspheric surface comprising a first aspheric curve and a second aspheric surface comprising a second aspheric curve perpendicular to the first aspheric curve, according to some examples;

FIGS. 4A-4C show irradiance values for a simulated rectangular space illuminated using a simulated one-sided lens design as described herein, according to some examples;

FIG. 5 shows irradiance values for a for a simulated rectangular space illuminated without any lens, according to some examples; and

FIGS. 6A-6B show irradiance values for a simulated rectangular space illuminated using a simulated two-sided lens design as described herein, according to some examples.

FIGS. 7A-7D depict a multi-lens aspheric lens assembly that generates a rectangular intensity distribution of light in an illumination plane.

## DETAILED DESCRIPTION

It will be appreciated that any of the variations, examples, features, and options described in view of the systems apply equally to the methods and vice versa. It will also be clear that any one or more of the variations, examples, features, and options can be combined.

Disclosed herein are lens assemblies and optical systems that use aspheric lenses to transform light incident on the lens into a uniform rectangular distribution. An optical system may include a light source and an aspheric lens. Light generated by the light source may be incident on the aspheric lens and may be refracted by the lens to create a uniform rectangular distribution of light that is incident on an illumination plane normal to the optical axis of the optical system.

The aspheric lens may have an optical axis in the $z$ direction (with the illumination plane in the positive $z$ direction from the aspheric lens), and may include one or more aspheric surfaces that are transverse (though not necessarily normal) to the $z$ axis. The one or more aspheric surfaces provided on the aspheric lens may include a first aspheric curve in the $y$-$z$ plane, and a second aspheric curve in the $x$-$z$ plane. The first and second aspheric curves may have different shapes, for example by having different curvatures such that the first curvature is tighter than the second curvature, and such that the first aspheric curve has a greater surface sag than the second aspheric curve. By providing an aspheric lens that includes two aspheric curves having two different curvatures, wherein the two aspheric curves are defined in planes that intersect the optical axis and are perpendicular to one another, the aspheric lens may generate a rectangular distribution of light that has a relatively uniform intensity distribution across a rectangular shape in the illumination plane.

As described in further detail below, an aspheric lens for generating a uniform rectangular distribution and having two aspheric curves defined in planes that intersect the optical axis and are perpendicular to one another may be provided in different examples.

In some examples, the aspheric lens comprises the first aspheric curve and the second aspheric curve both provided on a single surface on a single side of the lens. These examples may be referred to as a "single side" or "single sided" arrangement. In these single-sided examples, the first aspheric curve and second aspheric curve may be defined in mutually perpendicular cross-sections of a single lens surface. The single lens surface including both the first and second aspheric curves may, for example, include the first curve in a (e.g., vertical) cross-section intersecting the optical axis of the lens and the second curve in a (e.g., horizontal) cross-section intersecting the optical axis of the lens. The lens surface comprising the curves may comprise a smooth rotational transition between the first curve and the second curve that defines a smooth convex lens surface. In some examples, the opposite surface of the lens (opposite the single lens surface that includes both the first and second aspheric curves) may, in the single side arrangement, be a planar surface.

In some examples, the aspheric lens comprises the first aspheric curve as a part of a first surface of the lens and comprises the second aspheric curve as part of a second (e.g., mutually opposite) surface of the lens. These examples may be referred to as a "two side" or "two sided" arrangement. In these two-sided examples, the two mutually orthogonal aspheric curves, each of which are transverse to the optical axis of the lens, may be provided as parts of different and mutually opposite-facing respective convex surfaces of the lens. For example, the first curve may be formed on a first surface on a first side of the lens, and the second curve may be formed on a second surface on the second side of the lens. The two surfaces may each be convex surfaces that have different curvatures that are defined in planes that are mutually perpendicular to one another. In some examples, the first and/or second surfaces opposite one another may have geometries that are defined (at least in part) by extrusion of a curve in a dimension perpendicular to the curve. The first surface, for example, may be defined by a translation (over at least a part of the first surface) of the first curve in the *x* direction, and the second surface may be defined by a translation (over at least a part of the second surface) of the second curve in the y direction.

Additional details regarding these examples, sub-examples thereof, and other examples (any one or more of which may be combined in whole or in part with one another), are described in further detail below.

*Optical System*

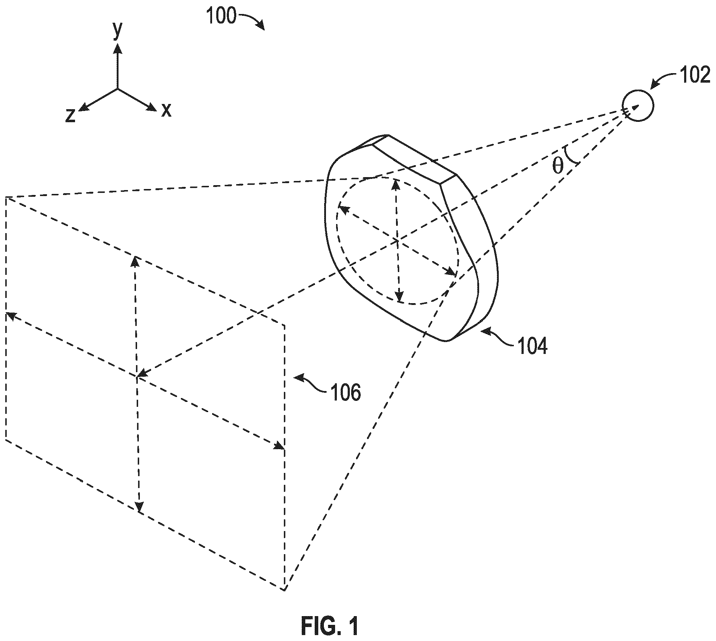

FIG. 1 depicts an optical system 100 comprising an aspheric lens that generates a rectangular intensity distribution of light in an illumination plane, according to some examples. In some examples, optical system 100 may be an illumination system for use in surgical application, such as an illumination system for an open-field surgical image and video capture device. In some examples, optical system 100 may be provided as part of a handheld open-field surgical image and video capture device. Optical system 100 may be used to provide uniform illumination across a rectangular distribution that closely aligns with a rectangular field of view of an image capture device, which may, in some examples, be provided as part of the same system.

As shown in FIG. 1, optical system 100 comprises light source 102, aspheric lens 104, and illumination plane 106. Light source 102, aspheric lens 104, and illumination plane 106 may be aligned along an optical axis in the *z* direction, with the positive *z*-direction being the direction of travel of illumination from light source 102 through aspheric lens 104 to illumination plane 106.

Light source 102 may comprise any suitable light source for generating narrow-band and/or wide-band illumination.

Light source 102 may comprise one or more LED, OLED, laser, Xenon Arc Lamps and/or incandescent light sources. Light source 102 may be a coherent or incoherent light source. Light source 102 may comprise a fiber optic cable that is paired with one or more of a LED, OLED, laser, Xenon Arc Lamp, and/or incandescent light source.

Light source 102 may emit across one or more wavelength ranges. In some examples, light source 102 may emit in the visible light, ultraviolet, and/or infrared ranges. In some examples, a wavelength range of light source 102 may include 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 1100 nm, 1200 nm, 1300 nm, 1400 nm, 1500 nm, 2000 nm, and/or 3000 nm. In some examples, a wavelength range of light source 102 may be centered at or around 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 1100 nm, 1200 nm, 1300 nm, 1400 nm, 1500 nm, 2000 nm, and/or 3000 nm.

In some examples, a wavelength distribution of light source 102 may have any suitable profile, including but not limited to a gaussian or approximately gaussian spectral distribution. In some examples, a wavelength distribution of light source 102 may have a range (e.g., a full-width half-max (FWHM) range) of 5 nm, 10 nm, 25 nm, 50 nm, 100 nm, 250 nm, 500 nm, or 1000 nm.

Light source 102 may be a point-source (e.g., a light source having a very small spatial distribution) or it may be a source having a spatial distribution. In some examples, the spatial distribution of light source 102 may be provided by an LED or LED array that is greater than or equal to 1 mm, 2 mm, 3 mm, 4 mm, or 5 mm in length and/or width. In some examples, the spatial distribution of light source 102 may be provided by an LED or LED array that is less than or equal to 1 mm, 2 mm, 3 mm, 4 mm, or 5 mm in length and/or width. In some examples, the spatial distribution of light source 102 may be provided by an array or other assembly of LEDs. In some examples, the spatial distribution of light source 102 may be uniform and/or rectangular. In some examples, the spatial distribution of light source 102 may be provided by an LED. In some examples, the spatial distribution of light source 102 may be provided by a filament bulb.

In some examples, for example in the case of an LED, an angular distribution of light source 102 may be greater than or equal to 50 degrees, 60 degrees, 70 degrees, or 80 degrees. In some examples, for example in the case of an LED, an angular distribution of light source 102 may be less than or equal to 50 degrees, 60 degrees, 70 degrees, or 80 degrees. In some examples, for example in the case of a laser, an angular distribution of light source 102 may be greater than or equal to 0.1 degrees, 0.5 degrees, or 1 degree. In some examples, for example in the case of a laser, an angular distribution of light source 102 may be less than or equal to 0.1 degrees, 0.5 degrees, or 1 degree.

In some examples, for example in the case of an arc lamp, light source 102 may emit into a three-dimensional donut. In some of said examples, first-stage beam-shaping may be applied to light emitted from an arc lamp.

In some examples, light source 102 may have an emitting area that is rectangular, circular, or elliptical in shape. In some examples, an emitting surface of light source 102 may be after shaping of the source, such as in the case of an arc lamp. In some examples, light source 102 may emit light into an area subtending an angle at the source of (e.g., may have an angular distribution of) less than or equal to 1 degree, 5 degrees, 60 degrees, or 180 degrees. In some examples, light source 102 may emit light into an area subtending an angle at the source of (e.g., may have an angular distribution of) greater than or equal to 1 degree, 5 degrees, 60 degrees, or 180 degrees.

In some examples, light source 104 may comprise one or more RGB LEDs and/or one or more IR LEDs. In some examples, light source 104 may comprise a yellow phosphor that has a broad gaussian curve along with a blue LED with a narrow gaussian curve. In some examples, light source 104 may comprise a Xenon arc lamp and/or a halogen lamp.

Light source 102 may provide light that defines an illuminated region on aspheric lens 104. As shown in FIG. 1, the shape of an illuminated region in the plane of lens 104 may be circular or approximately circular. The illuminated region in the plane of lens 104 may be defined by an outer illumination angle $\theta$ made with respect to the optical axis of system 100. The outer illumination angle $\theta$ may be defined by an outer edge of an illumination cone created by light source 102. The outer illumination angle $\theta$ may be defined by a rapid decrease (e.g., a step function) in an illumination intensity profile as a function of the angle with respect to the central optical axis. The outer illumination angle $\theta$ may be defined by a FWHM intensity in an illumination intensity profile as a function of the angle with respect to the central optical axis.

In some examples, light source 102 may have a power of greater than or equal to 1 $\mu$W, 10 $\mu$W, 100 $\mu$W, 1 mW, 10 mW, 100 mW, 1 W, 2 W, 3 W, 5 W, 10 W, 20 W, or 25 W. In some examples, light source 102 may have a power of less than or equal to 1 $\mu$W, 10 $\mu$W, 100 $\mu$W, 1 mW, 10 mW, 100 mW, 1 W, 2 W, 3 W, 5 W, 10 W, 20 W, or 25W. In some examples, light source 102 may have a power of 2-3 W, which may be configured for use cases in certain illuminated instruments.

In some examples, lens 104 may be made from one or more materials including, but not limited to, thermopolymers, which are optically transmissive (e.g., polycarbonate, cyclic olefin copolymer, cyclic olefin polymer, and/or Poly(methyl methacrylate) (PMMA)). In some examples, lens 104 may be made from one or more materials including, but not limited to, moldable glass (e.g., B 270 glass). In some examples, lens 104 may be made from one or more materials including, but not limited to, optically clear thermosets (e.g., Columbia Resin #39, and/or silicone).

As shown in FIG. 1, light from light source 102 may be incident on lens 104 in a circular or essentially circular illumination pattern. The light from light source 102 may be refracted by lens 102 and may propagate towards illumination plane 106. Lens 102 may be shaped and may comprise one or more materials having index(es) of refraction selected such that lens 102 refracts the circular light incident on it into a uniform rectangular distribution in illumination plane 106. Additional details about configurations and performance of lens 104 in various examples are provided below.

*Single-sided lens*

As noted above, an aspheric lens as disclosed herein (e.g., lens 104) may have an optical axis in the *z* direction, with propagation of illumination light in the positive *z* direction. The aspheric lens may include one or more aspheric surfaces that include a first aspheric curve in the *y-z* plane and a second aspheric curve in the *x-z* plane. In "single-sided" examples (as referenced above), the aspheric lens comprises the first aspheric curve and the second aspheric curve both provided on a single surface on a single side of the lens. The first aspheric curve and second aspheric curve may thus be defined in mutually perpendicular cross-sections of a single lens surface.

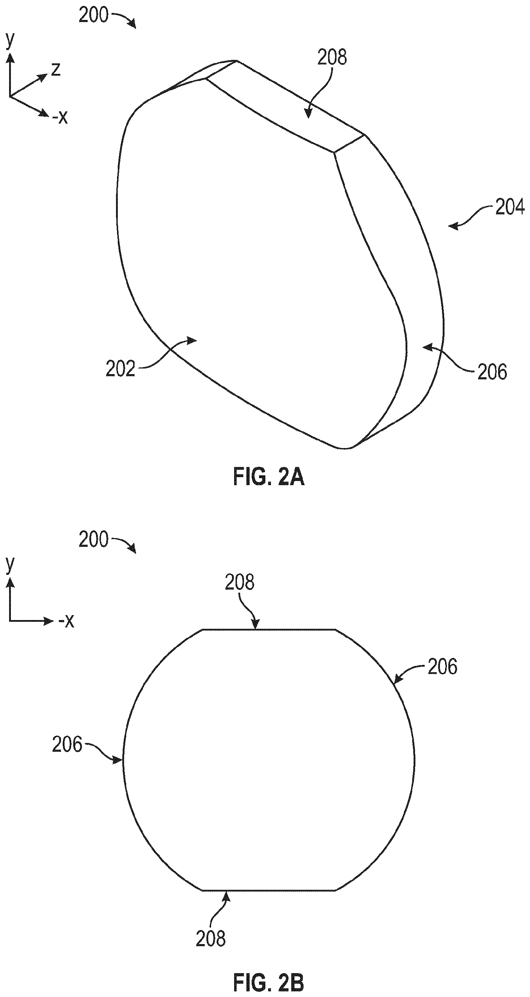

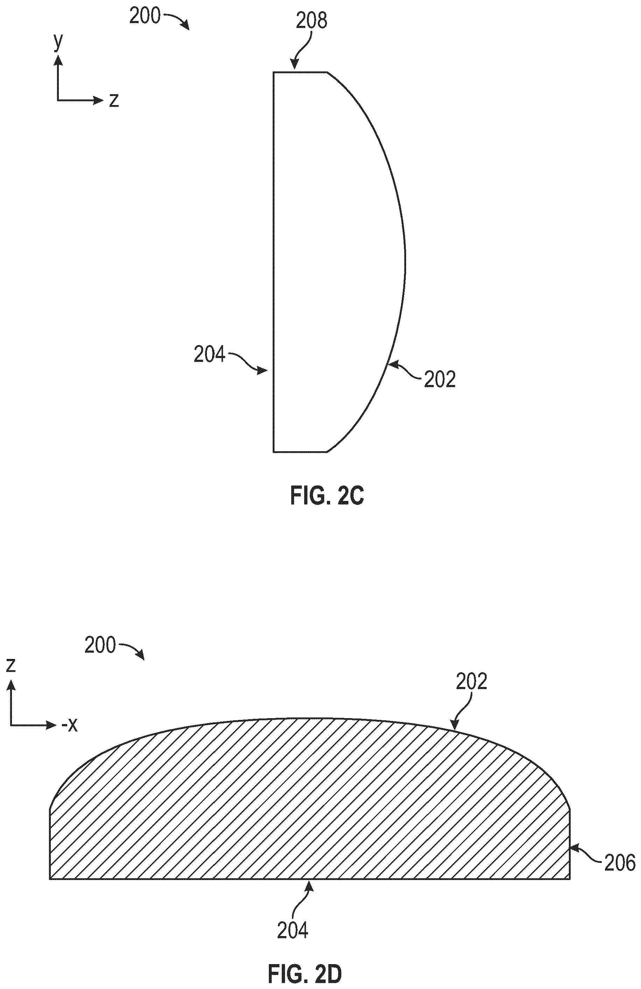

FIGS. 2A-2D depict an aspheric lens 200 that generates a rectangular intensity distribution of light in an illumination plane, wherein the aspheric lens comprises an aspheric surface comprising two perpendicular aspheric curves on a single side of the aspheric lens, according to some examples. FIG. 2A depicts a perspective view of lens 200; FIG. 2B depicts a plan view of lens 200, shown in an *x-y* plane, FIG. 2C depicts a cross-sectional side view of lens 200, shown in a *y-z* plane that runs along the central optical axis of lens 200, and FIG. 2D depicts a cross-sectional view of lens 200, shown in a x-z plane that runs along the central optical axis of lens 200.

Aspheric lens 200, which may share any one or more characteristics in common with lens 104 and/or with other lenses described herein, is an example of a single-sided lens as described herein.

As shown in FIG. 2A, lens 200 includes curved surface 202 and flat surface 204, which are opposite-facing with respect to one another. Flat surface 204 is planar, while curved surface 202 is aspherically curved in both the x direction and the y direction.

As shown in FIGS. 2A and 2B, lens 200 has a rounded oval-like shape in the plan view in the *x-y* plane depicted in FIG. 2B. Curved edge surfaces 206 run around the *x*-direction left and right edges of lens 200, and linear edge notches 208 run along the *y*-direction top and bottom edges of lens 200. In some examples, edge notches 208 are not optically functional, but help ensure correct orientation of lens 200 when it is installed into a system. Different shapes may be used to ensure alignment of lens 200.

As noted, curved surface 202 is aspherically curved in both the x direction and the y direction. That is, curved surface 202 includes both the first aspheric curve and the second aspheric curve.

As shown in FIG. 2C, curved surface 202 includes the first aspheric curve in a cross-section in the *y-z* plane at *x*=0 (such that the *y-z* plane including the first aspheric curve intersects the optical axis (the *z*-axis)) of lens 200. The first aspheric curve runs along curved surface 202 in the cross-section shown in FIG. 2C at the *y-z* plane at *x*=0.

As shown in FIG. 2D, curved surface 202 includes the second aspheric curve in a cross-section in the *x-z* plane at *y*=0 (such that the *x-z* plane including the first aspheric curve intersects the optical axis (the *z*-axis)) of lens 200. The second aspheric curve runs along curved surface 202 in the cross-section shown in FIG. 2D at the *x-z* plane at *y*=0. The first aspheric curve and the second aspheric curve intersect one another at the point at which the optical axis intersects curved surface 202, at *x*=0 and *y*=0.

While lens 200 includes the first aspheric curve along curved surface 202 in the *y-z* plane at *x*=0 and includes the second aspheric curve along curved surface 202 in the *x-z* plane at *y*=0, curved surface 202 may include additional aspheric curves along other planes along which the *z*-axis runs. For example, lens surface 202 may comprise a smooth rotational transition between the first curve and the second curve, such that the rotational transition defines a smooth convex shape for lens surface 202. Throughout the smooth rotational transition, the additional aspheric curves may be defined in various different planes. For example, a third aspheric curve may run along curved surface 202 in the *x*=*y,z* plane (at a 45-degree angle between the *x-z* plane and the *y-z* plane). The third aspheric curve may have a different characteristic curvature (*see* discussion below regarding characteristic curvatures of the first aspheric curve and second aspheric curve) than both the first aspheric curve and the second aspheric curve. Because the first aspheric curve and the second aspheric curve differ from one another (with one being "tighter" than the other and one having greater surface sag than the other) in order to create a uniform rectangular illumination distribution from a circular distribution incident on lens 200, the third aspheric curve running through the *x*=*y,z* plane (at a 45 degree angle between the *x-z* plane and the *y-z* plane) may have a characteristic curvature that is more similar to one of the first curve or the second curve than the other.

*Two-sided lens*

As noted above, an aspheric lens as disclosed herein (e.g., lens 104) may have an optical axis in the *z* direction, with propagation of illumination light in the positive *z* direction. The aspheric lens may include one or more aspheric surfaces that include a first aspheric curve in the *y-z* plane and a second aspheric curve in the *x-z* plane. In "two-sided" examples (as referenced above), the aspheric lens comprises the first aspheric curve provided on a first surface of the lens and the second aspheric curve provided on a second surface of the lens, wherein the first and second surface are opposite-facing lens surfaces with respect to one another. The first aspheric curve and second aspheric curve may thus be defined in mutually perpendicular cross-sections of the lens, tracing along different surfaces of the lens. Unlike in the single-sided examples, the first and second curves in the two-sided examples may, in some examples, not intersect each other at any point.

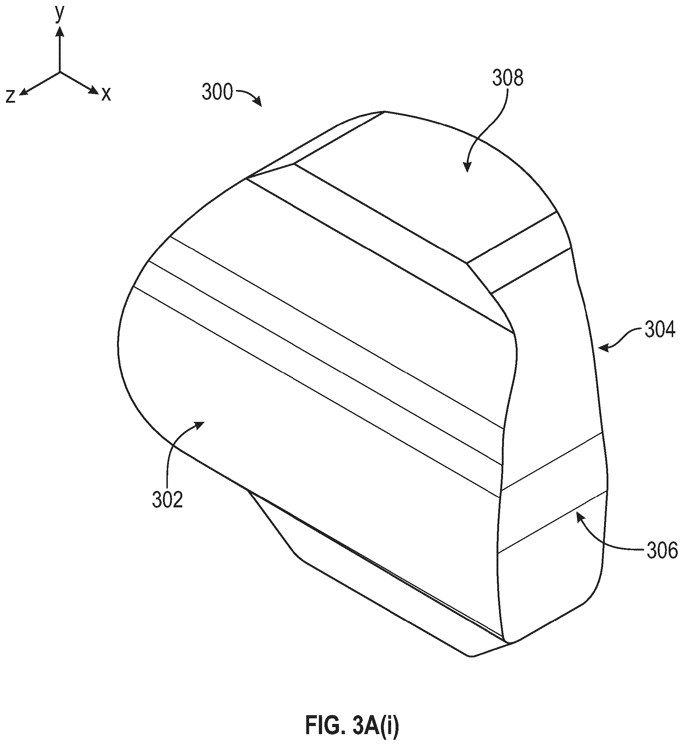

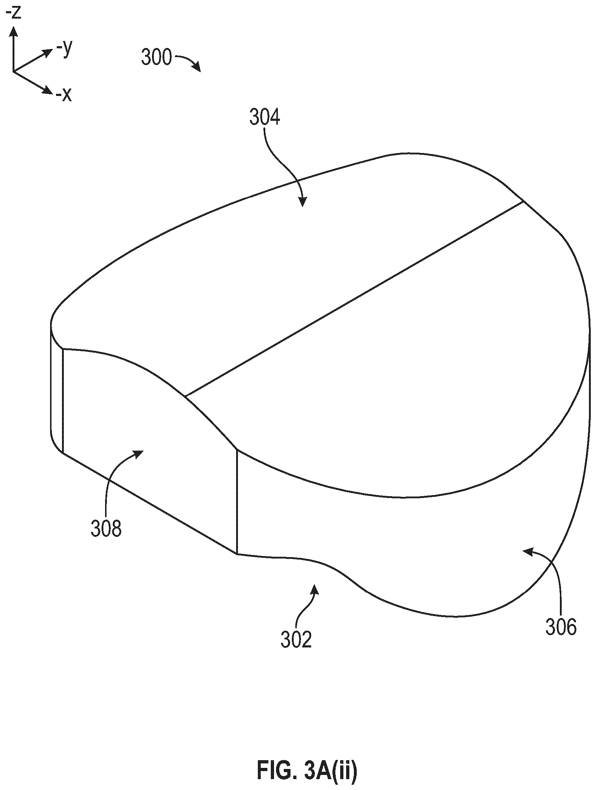

FIGS. 3A(i)-3D depict an aspheric lens 300 that generates a rectangular intensity distribution of light in an illumination plane, wherein the aspheric lens comprises a first aspheric surface comprising a first aspheric curve and a second aspheric surface comprising a second aspheric curve in a plane perpendicular to the plane of the first aspheric curve, according to some examples.

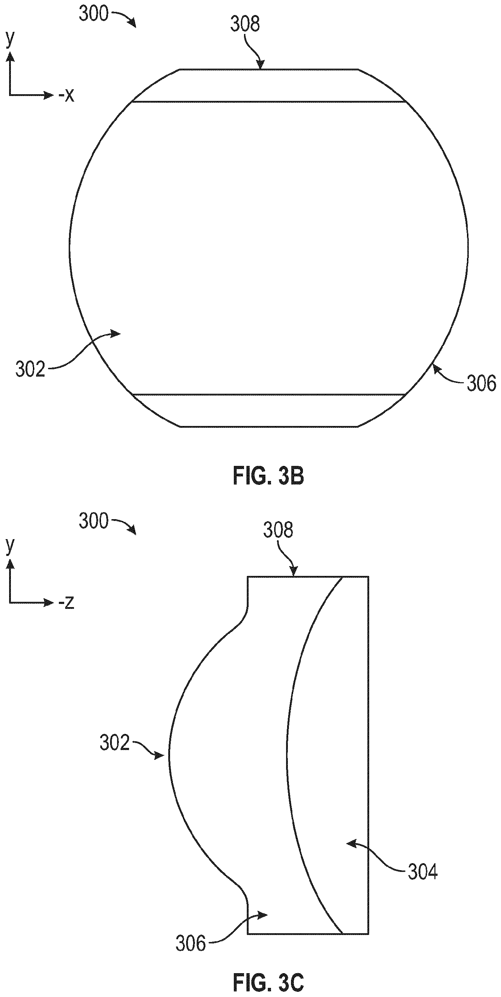

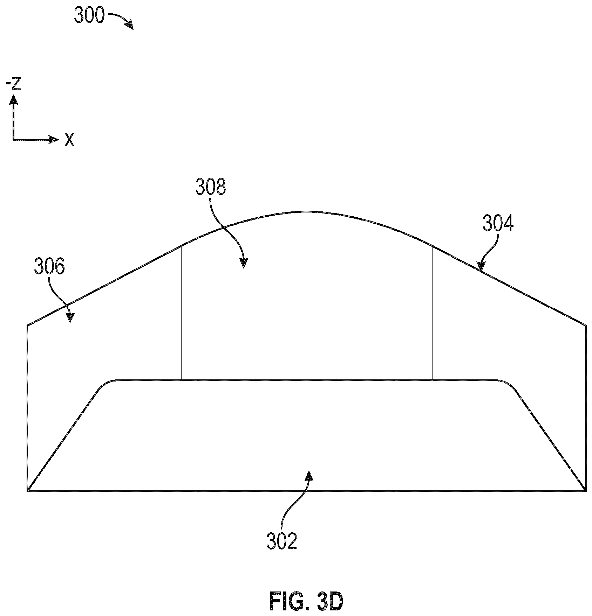

FIGS. 3A(i) and 3A(ii) depict perspective views of lens 300; FIG. 3B depicts a plan view of lens 300, shown in an *x-y* plane, FIG. 3C depicts a cross-sectional side view of lens 300, shown in a *y-z* plane that runs along the central optical axis of lens 300, and FIG. 3D depicts a cross-sectional top view of lens 300, shown in an *x-z* plane that runs along the central optical axis of lens 300.

Aspheric lens 300, which may share any one or more characteristics in common with lens 104 and/or with other lenses described herein, is an example of a two-sided lens as described herein.

As shown FIGS. 3A(i) and 3A(ii), lens 300 includes first curved extruded surface 302 on a first side of lens 300 and includes second curved extruded surface 304 on a second side of lens 300, wherein the first and second surfaces 302 and 304 are opposite-facing with respect to one another. Curved extruded surface 302 is aspherically curved in the y direction (in the y-z plane), and has a shape that is defined by linear extrusion (translation) of the curve in the x direction. Curved extruded surface 304 is aspherically curved in the x direction (in the x-z plane), and has a shape that is defined by linear extrusion (translation) of the curve in the y direction.

As shown in FIGS. 3A(i), 3A(ii), and 3B, lens 300 has a rounded oval-like shape in the plan view in the x-y plane depicted in FIG. 3B. Curved edge surfaces 306 run around the x-direction left and right edges of lens 300, and linear edge notches 308 run along the y-direction top and bottom edges of lens 300.

As noted, curved extruded surface 302 is aspherically curved in the y direction (in the y-z plane), but is not curved in the x direction (in the x-y plane), having a shape that is defined by linear extrusion (translation) of the curve in the x direction. Thus, curved extruded surface 302 includes one of the aspheric curves but not the other. In some examples, curved extruded surface 302 includes the first aspheric curve and not the second aspheric curve. In some examples, the tighter curved surface may face away from the light source because, if the tighter curved surface were placed on the side of the lens facing the light source, angles of incidence of the light onto the tighter curved surface could be too extreme, possibly leading to potential reflection instead of transmission.

As shown in FIG. 3C, curved extruded surface 302 includes the first aspheric curve in a cross-section in the y-z plane at x=0 (such that the y-z plane including the first aspheric curve intersects the optical axis (the z-axis)) of lens 200. The first aspheric curve runs along curved extruded surface 202 in the cross-section shown in FIG. 2C at the y-z plane at x=0, and also at other y-z planes at other x values, due to the shape of curved extruded surface 302 in which the first aspheric curve is extruded/translated in the x direction.

As shown in FIG. 3D, curved extruded surface 304 includes the second aspheric curve in a cross-section in the x-z plane at y=0 (such that the x-z plane including the second aspheric curve intersects the optical axis (the z-axis)) of lens 300. The second aspheric curve runs along curved extruded surface 302 in the cross-section shown in FIG. 3D at the x-z plane at y=0, and also at other x-z planes at other y values, due to the shape of curved extruded surface 304 in which the second aspheric curve is extruded/translated in the y direction.

*Irradiance performance at the illumination plane*

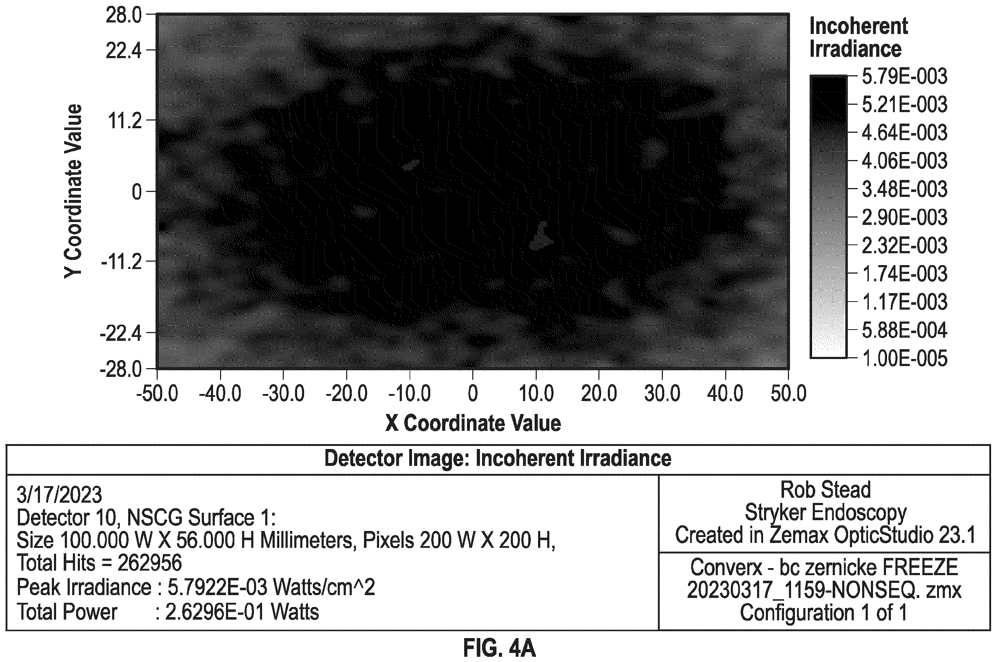

FIGS. 4A-4C show irradiance values for a simulated rectangular space illuminated using a simulated one-sided lens design as described herein. The simulated illumination wavelength used is 640 nm. The simulated light source power is 1 W. A monochromatic simulation model is used. Simulated spacing between the light source and lens is 10 mm. Simulated spacing between the lens and detector is 50 cm..

As shown in FIG. 4A, a relatively uniform rectangular irradiance distribution is generated, for example providing even illumination across a rectangular field of view in surgical imaging contexts.

Total power wattage reaching the detector is simulated to be 2.629E-01 W. Peak irradiance is simulated to be 5.7922E-03 W/cm$^2$.

The standard deviation for irradiance of sensor pixels in FIG. 4A is 2E-03.

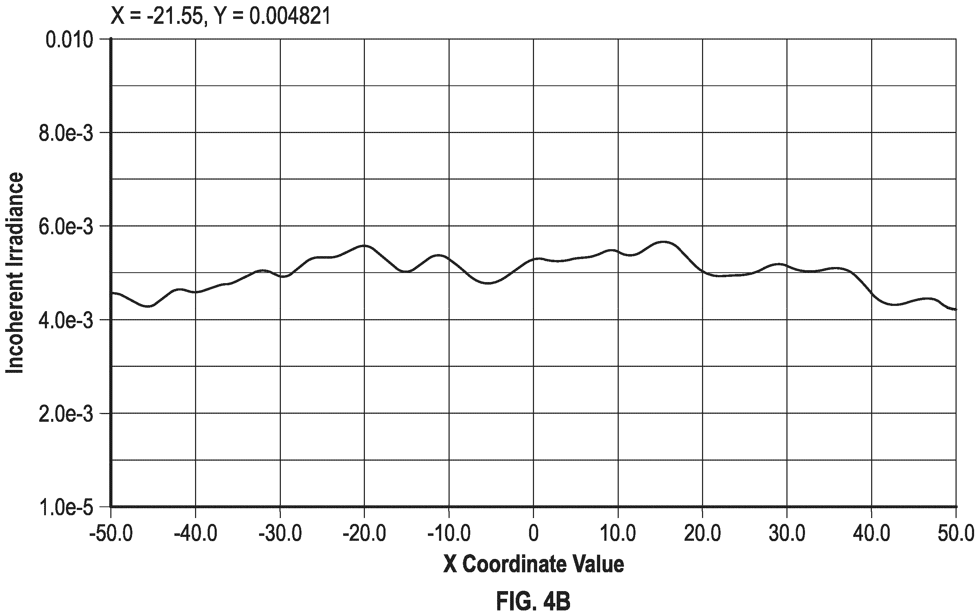

FIG. 4B shows irradiance at each x coordinate value across the horizontal midline of the rectangular space shown in FIG. 4A. As shown, irradiance is maintained within an envelope between 4.0E-03 and 6.0E-03 W/cm$^2$.

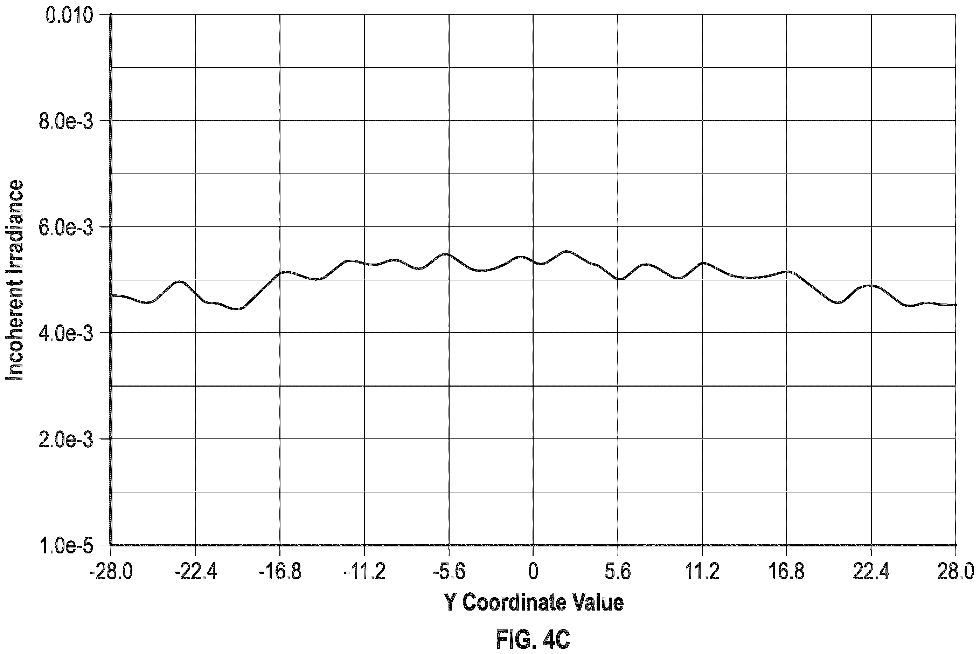

FIG. 4C shows irradiance at each y coordinate value across the vertical midline of the rectangular space shown in FIG. 4A. As shown, irradiance is maintained within an envelope between 4.0E-03 and 6.0E-03 W/cm$^2$ (between about 4.5E-03 and 5.5E-03 W/cm$^2$).

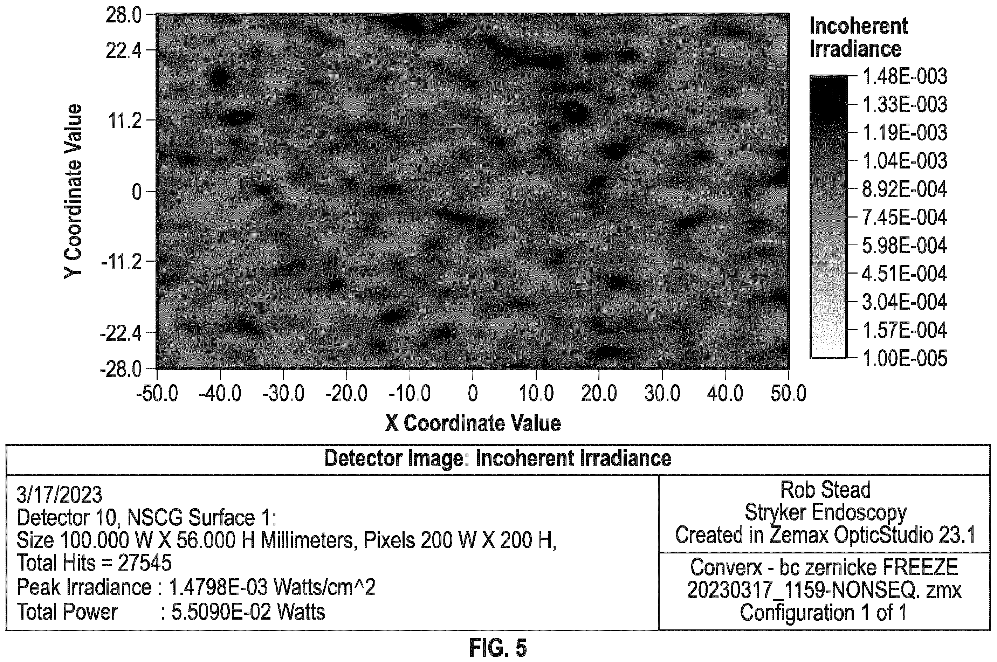

FIG. 5 shows irradiance values for a simulated rectangular space illuminated without any lens, which provides a comparison against the performance shown in FIGS. 4A-4C. Light is simulated as incident on the illumination plane directly from a fiber. While the uniformity/flatness of the irradiance at the illumination plane is fine, the problem with this simulated illumination without using a lens such as one disclosed herein is that most of the light misses the field of view, which is why the total power is much lower than in FIGS. 4A-4C.

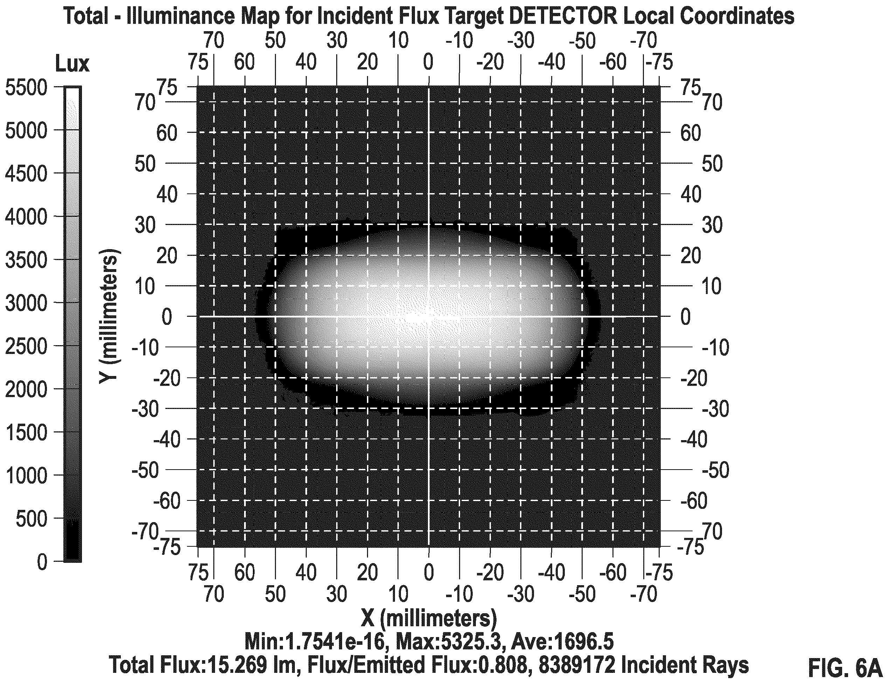

FIGS. 6A-6B show irradiance values for a simulated rectangular space illuminated using a simulated two-sided lens design as described herein.

FIG. 6A shows simulated illumination at 150 mm distance on a target that is 150 mm x 150 mm. As shown, the shape of the illumination pattern is a rectangular pattern, with low intensity outside the illuminated rectangle.

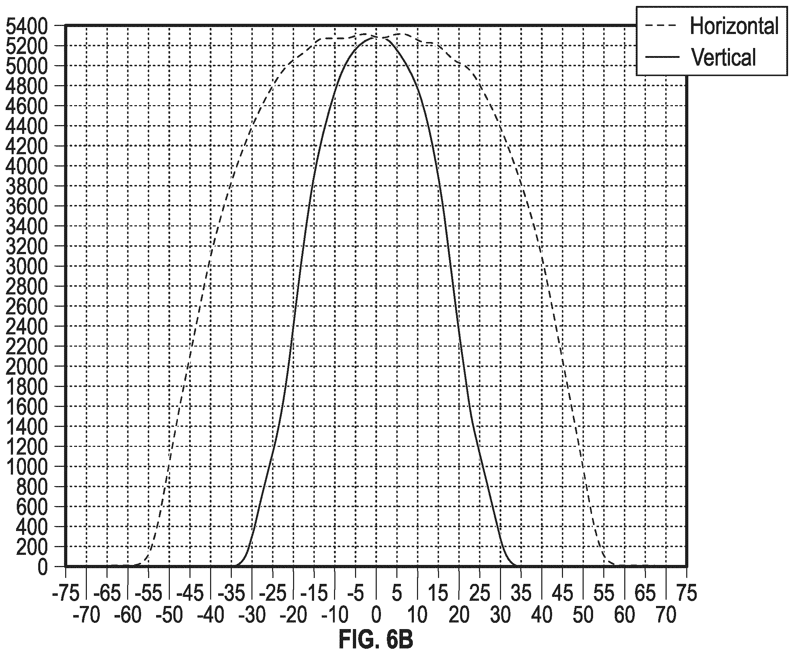

FIG. 6B shows horizontal and vertical scans of the illuminance values through respective center-lines of the illumination pattern in FIG. 6A. The narrower peak shows the vertical scan, while the broader peak shows the horizontal scan.

Using the lens designs disclosed herein, improved performance may be achieved in irradiance at the task plane in terms of total power delivered to the illumination plane (e.g., as compared to total power delivered using other lens designs that create relatively uniform irradiance at the task plane) and power efficiency as expressed by the ratio of total power delivered to the illumination plane to power of the light incident on the lens (e.g., as compared to power efficiency achieved using other lens designs that create relatively uniform irradiance at the task plane).

Using the lens designs disclosed herein, improved performance in uniformity of irradiance at the task plane may be achieved. Uniformity of irradiance at the task plane may provide a standard deviation of irradiance of sensor pixels of less than or equal to 4E-03, 2E-03, or 1E-03 times the total power incident on the task plane.

The lens designs provided herein may simultaneously provide high uniformity of irradiation at the task plane and high power efficiency ($E$) as described above in this section. Performance of lens designs provided herein may be quantified by a figure of merit ($FoM$) defined as $FoM = (E/\sigma)$, where $\sigma$ is defined as the ratio of irradiance on axis versus irradiance at the edge of the task plane. A different value for $\sigma$ may be defined for each dimension transverse to the task plane, so different $FoM$ values may be defined for different dimensions for a lens design as disclosed herein that produces a rectangular illumination pattern. Alternatively, $\sigma$ may be defined based on the average value of irradiance at all points on the edge of the task plane, so an overall $\sigma$ value for the lens and an overall $FoM$ value for the lens may be defined.

*Fresnel Geometries*

In some examples, the aspheric lenses provided herein may be provided as using one or more Fresnel lens geometries. For example, any of the curved surfaces described herein may be divided into a plurality of linear zones, square or rectangular pixel zones, or annular ring zones (as viewed in a plan view, e.g., an *x-y* plane, of the lens). The zones may have internally continuous surfaces defined by one or more aspheric curves, but they may be separated from one another by discontinuities such as linear or near-linear step portions that are parallel or nearly parallel to the optical axis of the lens. The step functions may allow for the continuous surfaces of each of the zones to be located within a more compact *z*-directional space with respect to one another than if the entire lens surface were formed as one continuous curve with no discontinuities. That is, by using discontinuities and a Fresnel geometry, a curved lens surface may be provided across a plurality of zones which may be positioned alongside one another by "shifting" different portions of the curved lens surface by different distances in the *z* direction, allowing for a *z*-dimensional flattening of the lens and thereby allowing the lens to be thinner along the optical axis.

In the context of the present disclosure, any of the example aspheric lenses described herein may be provided via Fresnel geometries.

In the case of the one-sided examples, the curved surface may be divided into a plurality of concentric annular ring zones and/or into a grid of pixel zones, separated from one another by *z*-directional discontinuities. The aspheric curves described herein (e.g., the first aspheric curve, the second aspheric curve, the third "diagonal" aspheric curve, and other aspheric curves) that are provided along the single curved surface of the one-sided examples, may in sub-examples in which a Fresnel geometry is used, be discontinuous aspheric curves provided across a plurality of Fresnel pixels or Frensel rings.

In the case of the two-sided examples, each of the two curved extruded surfaces may be divided into a respective plurality of linear zones, wherein the lines defining demarcations between the linear zones are parallel with the direction of extrusion. For each curved extruded surface, the plurality of linear zones may be separated from one another by *z*-directional discontinuities. The aspheric curves described herein (e.g., the first aspheric curve in the case of one of the curved extruded surface and the second aspheric curve in the case of the other curved extruded surface), may in sub-examples of the two-sided arrangements in which a Fresnel geometry is used, be discontinuous aspheric curves provided across a plurality of Fresnel ridges.

While FIGS. 1-3, by way of example, show continuously curved surfaces, it should be understood in light of the disclosure herein that discontinuously curved surfaces using Fresnel geometries may also be used, and that these discontinuous geometries are also understood to include the first and second aspheric curves as discussed herein, simply in a discontinuous rather than continuous manner.

*Multi-lens assemblies*

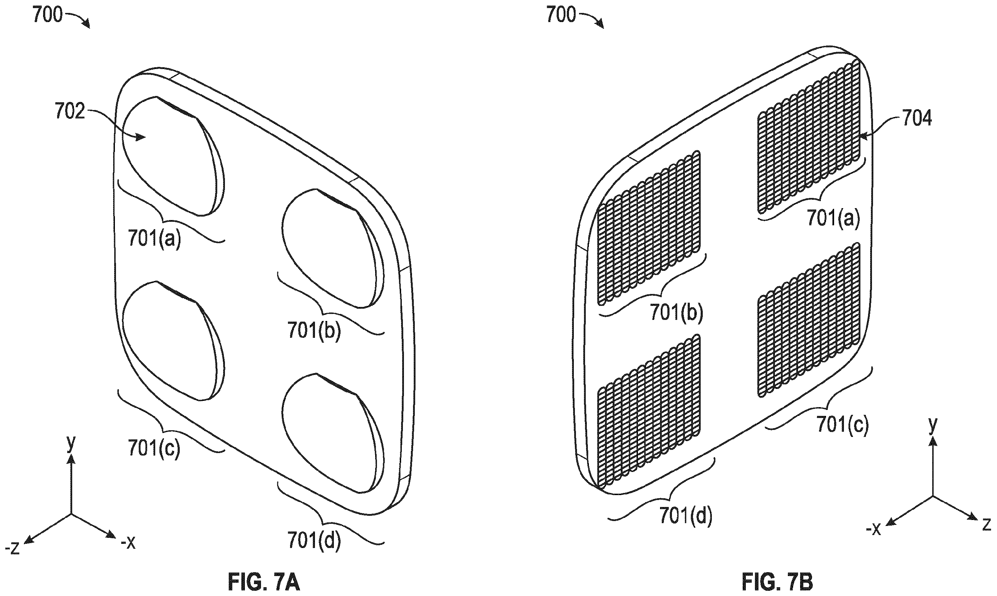

FIGS. 7A-7D depict a multi-lens aspheric lens assembly 700. Lens assembly 700 comprises four aspheric lenses 701(a)-701(d) arranged in a common plane with one another, in a rectangular array. As shown in FIG.; 7A, the y-axis may represent a vertical direction, the x-axis may represent a horizontal direction, and the z-axis may represent an optical axis of the aspheric lens assembly 700, with the positive z direction in the direction of the projection plane (e.g., the direction of a region to be illuminated). The optical power of the multi-lens aspheric lens assembly 700 may be different in the x-axis direction than in the y-axis direction. The result may be an optical pattern that resembles a rectangle.

Each of the four aspheric lenses 701(a)-701(d) comprises a respective first side 702 and a respective second side 704. The four aspheric lenses 701(a)-701(d) may have identical geometries to one another. For the purposes of this description, reference will be made to one of the four aspheric lenses 701(a); the other three lenses may, in some aspects, share any one or more characteristic in common with aspheric lens 701(a). Aspheric lens 701(a) comprises a first aspheric surface 702 and a second surface 704, opposite surface 702, comprising a micro-lens array.

The second surface 704 comprising the micro-lens array may be a distal side of aspheric lens 701(a) (downstream of the light source, toward the projection plane, and/or toward the patient). The lens array may have very little optical power and serves to help homogenize the light pattern. In some aspects, the curvature of the lenses in the lens array on the second surface 704 of aspheric lens assembly 700 may be such that any increase to the viewing angle of the system is less than 5 about degrees, or less than about 1 degree.

Lens assembly 700 may operate without additional optics.

Lens assembly 700 may be fabricated by molding the four aspheric lenses 701(a)-701(d) onto a single substrate, such as a flat substrate between and connecting the four lenses that may function as a clear window and may have no optical power. In some aspects in which lens assembly 700 is deployed as part of an imaging system, imaging optics and an image sensor/prism may be located behind the window in the central portion between the illumination lenses of lens assembly 700.

The four aspheric lenses may be molded in one shot, which may reduce cost and manufacturing complexity. The four aspheric lenses may have their locations set once a molding tool is finalized, which may remove possible errors in tolerances that may come with working with multiple lenses. Lens assembly 700 may allow for all four aspheric lenses 701(a)-701(d) to be installed in one action, which may reduce time requirements for use and reduce opportunity for error. In some aspects, a solid model may be used to CNC machine aspheric surfaces.

The four aspheric lenses may function independently of one another, for example in arrangements in which each of the lenses is used for a respective one or four corresponding illumination ports of an open-field surgical imaging device. Despite independent optical function, the four aspheric lenses may be manufactured and installed collectively as one piece.

FIG. 7A shows a first perspective view of lens assembly 700 showing first aspheric surface 702 of aspheric lens 701(a). FIG. 7A shows a second perspective view of lens assembly 700 showing second aspheric surface 704 of aspheric lens 701(a).

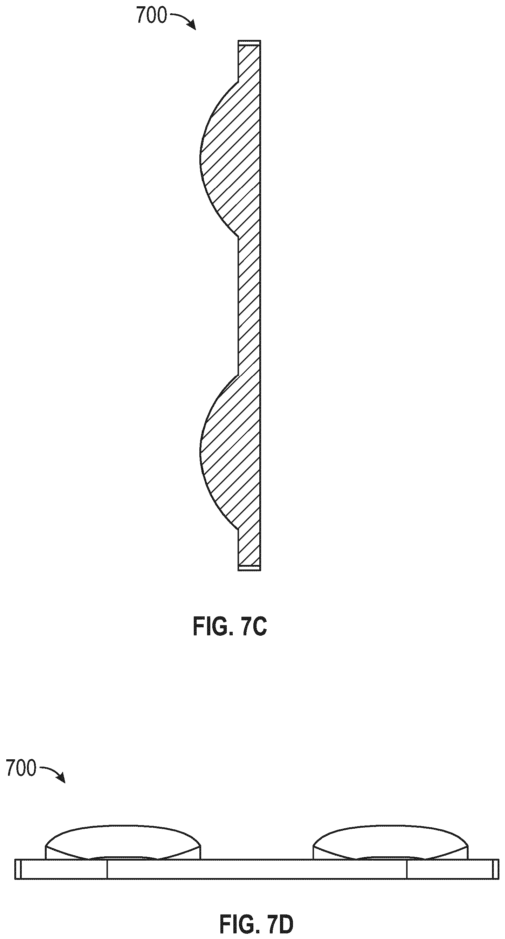

FIG. 7C shows a cross-sectional view of lens assembly 700.

FIG. 7D shows a cross-sectional view of lens-assembly 700.

First aspheric surface 702 may share any one or more characteristics (e.g., including but not limited to geometric and/or other optical characteristics) in common with any one or more other aspheric lens surfaces described herein, such as surface 202, surface 302, and/or surface 304. In some aspects, aspheric surface 702 may be a toroidal lens surface, or may be a surface resembling a toroidal lens surface. Aspheric surface 702 may impart different optical power in the x-direction than in the y-direction. The y-direction may impart more optical power than the x-direction such that a circular spot of illumination light is condensed into a rectangle with a smaller y-direction dimension than a larger x-direction dimension.

One or more of the micro-lenses in the micro-lens array on second surface 704 may share any one or more characteristics (e.g., including but not limited to geometric and/or other optical characteristics) in common with any one or more other aspheric lens surfaces described herein, such as surface 202, surface 302, and/or surface 304. In some aspects, the micro-lens array on second surface 704 may cause second surface 704 to collectively impart the same or similar optical effects as any one or more other aspheric lens surfaces described herein, such as surface 202, surface 302, and/or surface 304. In some aspects, one or more (including, in some aspects, all of) the micro-lenses in the micro-lens array may on second surface 704 may have spherical geometries. The micro-lenses may be sufficiently small such that there are a sufficient number of micro-lenses to mix and homogenize the light. The micro-lenses may be sufficiently large such that exotic tooling and/or machining methods (e.g., photolithography, e-beam writing, diamond turning, etc.) are not required. The micro-lens radius of curvature may be close to flat, imparting little optical power. For example, enough optical power may be imparted to create expansion of the viewing angle by less than about 1 degree. The micro-lenses may be sized, shaped, and/or spaced to diffuse the light slightly, for example such that the viewing angle does not by more than about 1 to 1.5 degrees. A smaller radius for the micro-lenses may create more diffusion. In some aspects, a spherical radius of about 1 to 5 mm may be used. In some aspects, a pitch between micro-lenses of about 0.5 to 2 mm may be used. A tight pitch may be advantageous, but the pitch may be kept large enough such that special tooling is not required.

In some aspects, the center-points of adjacent aspheric lenses in aspheric lens assembly 700 may be spaces apart from one another by about 24.18 mm.

In some aspects, lens assembly 700 may may comprise optical-grade acrylic. In some aspects, a surface finish on optical surfaces of lens assembly 700 may have smoothness of SPI A2 or better. In some aspects, a surface finish on non-optical surfaces of lens assembly 700 may have smoothness of SPI B1-B3. In some aspects, an antireflection coating may be used on one or both sides of lens assembly 700. The antireflection coating may provide an R (avg) of less than or equal to 0.75% over following one or more of the following spectral ranges: 430-570nm, 590-655nm, and/or 765-795nm.

In some aspects, in operation, a light source may be placed about 5.50 mm from the highest point of lenses 701 in lens assembly 700.

*Aspheric surfaces and aspheric curves*

The disclosure herein contemplates that the lenses include one or more aspherically curved surfaces, and more specifically that said surfaces each include one or more aspheric curves.

In some examples, an aspheric curve may be a non-circular curve segment. In some examples, an aspheric curve may be a non-elliptical curve segment. In some examples, an aspheric curve may be a non-conical curve segment. In some examples, an aspheric curve may be a non-circular, non-elliptical, and non-conical curve segment.

In some examples, the one or more aspheric surfaces may be characterized by the following equation:

$$z(x,y) \; = \; \frac{c_x x^2}{1 + \sqrt{1 - (1 + k_x)c_x^2 x^2}} \; + \; \sum_{i=1}^{8} \alpha_i x^i \; + \; \frac{c_y y^2}{1 + \sqrt{1 - (1 + k_y)c_y^2 y^2}}$$

$$+ \; \sum_{i=1}^{8} \beta_i y^i$$

where $c$ is curvature, $k$ is a conic constant, and $\alpha$ and $\beta$ are coefficients of aspheric terms. A surface that is defined by the above equation and in which the coefficients $\alpha$ and $\beta$ are non-zero for the surface may be referred to as an aspheric surface (rather than a conical surface).

Curvature $c$ may be defined as $1/R$, where $R$ is radius of curvature. Radius of curvature for lens surfaces disclosed herein may be about 30, 40, 50, 60, 70, 80, 90, or 100 cm. In some aspects, the spherical term $c$ may be zero, with the surface entirely defined by higher-order terms. Conic constant $k$ for lens surfaces disclosed herein may be between 0 and -1. The overall contribution of the sum term defined by aspheric coefficients $\alpha_i$ for lens surfaces disclosed herein may be about one hundredth or less of the overall contribution of the terms defined by $c$. Aspheric coefficients $\alpha_i$ may decrease with increasing $i$, such that $\alpha_i \approx 0.01 * \alpha_{(i-1)}$. The overall contribution of the sum term defined by aspheric coefficients $\beta_i$ for lens surfaces disclosed herein may be about one half, one tenth, one one hundredth, or one one thousandth of the overall contribution of the terms defined by $c$. Aspheric coefficients $\beta_i$ for lens surfaces disclosed herein may decrease with increasing $i$, such that $\alpha_i \approx 0.01 * \alpha_{(i-1)}$. Successive aspheric coefficients may be at least about an order of magnitude less than the preceding aspheric coefficient.

In some examples, one or more of the aspheric surfaces described herein may be expressed as a sum of even Zernike terms. In some examples, one or more of the aspheric surfaces described herein may be expressed as a sum of even Zernike terms without odd Zernike terms. In some examples, aspheric surfaces having odd Zernike terms could be used for beam steering.

Because the lenses disclosed herein are configured to generate a uniform rectangular distribution and not a uniform square distribution, the first aspheric curve in the *y-z* plane is not identical to the second aspheric curve in the *x-z* plane. The two curves are neither identical to one another, nor do they have identical characteristic curvatures. For example, the first aspheric curve may have a first curvature and the second curve has a second curvature, and the first curvature is tighter than the second curvature. In some examples, the radius of curvature of an aspheric curve may refer to a conical term that is summed with an aspheric term to define the overall aspheric curve. Additionally or alternatively, the first curve may have a first surface sag and the second curve has a second surface sag, wherein the first surface sag is larger than the second surface sag.

The foregoing description, for the purpose of explanation, has been described with reference to specific aspects and examples. However, the illustrative discussions above are not intended to be exhaustive or to limit the invention to the precise forms disclosed. Many modifications and variations are possible in view of the above teachings. The aspects and examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims. Finally, the entire disclosure of the patents and publications referred to in this application are hereby incorporated herein by reference.

For the purpose of clarity and a concise description, features are described herein as part of the same or separate examples; however, it will be appreciated that the scope of the disclosure includes examples having combinations of all or some of the features described.

**EP 4 707 879 A1**

**Claims**

1. A lens assembly comprising one or more lenses, wherein the one or more lenses together comprise a first surface and a second surface, wherein an optical axis of the lens assembly extends in the z-direction;

    the first surface comprises a first cross-section in a y-z plane, wherein the first cross-section comprises an aspheric first curve that varies in the y-z plane, wherein the first aspheric curve is non-circular, non-elliptical, and non-conical;
    one surface selected from the first surface and the second surface comprises a second cross-section in a x-z plane, wherein the second cross-section comprises an aspheric second curve in the x-z plane, wherein the second first aspheric curve is non-circular, non-elliptical, and non-conical.

2. The lens assembly of claim 1, wherein the first surface is entirely convex along the first curve.

3. The lens assembly of claim 1 or 2, wherein the one surface selected from the first surface and the second surface is entirely convex along the first curve.

4. The lens assembly of claim 1, 2 or 3, wherein the one surface is the first surface.

5. The lens assembly of claim 4, wherein the first curve, the second curve, and the optical axis intersect at a common point on the first surface.

6. The lens assembly of claim 4 or 5, wherein the first surface comprises a smooth rotational transition about the optical axis between the first curve and the second curve.

7. The lens assembly of any of claims 1-3, wherein the one surface is the second surface.

8. The lens assembly of claim 7, wherein:

    the first curve is convex in a first z-axis direction extending away from the second surface; and
    the second curve is convex in a second z-axis direction, opposite the first z-axis direction, extending away from the first surface.

9. The lens assembly of claim 7 or 8, wherein the first surface comprises an extruded geometry defined by translation of the first curve in the x direction.

10. The lens assembly of claim 7, 8 or 9, wherein the second surface comprises an extruded geometry defined by translation of the second curve in the y direction.

11. The lens assembly of any of claims 1-10, wherein the first curve has a first curvature and the second curve has a second curvature, wherein the first curvature is tighter than the second curvature.

12. The lens assembly of any of claims 1-11, wherein the first curve has a first surface sag and the second curve has a second surface sag, wherein the first surface sag is larger than the second surface sag.

13. The lens assembly of any of claims 1-12, wherein:

    the first curve is continuous between its outer bounds in the y axis direction; and
    the second curve is continuous between its outer bounds in the x axis direction.

14. The lens assembly of any of claims 1-12, wherein the first curve is a discontinuous curve comprising a first plurality of continuous curve portions separated by a first plurality of discontinuities, such that the first surface forms a Fresnel surface.

15. The lens assembly of claim 14, wherein:

    the one surface is the first surface;
    the second curve is a discontinuous curve comprising a second plurality of continuous curve portions separated by a second plurality of discontinuities; and
the first surface comprises a plurality of Fresnelized pixels.

16. The lens assembly of claim 14, wherein:

the first curve comprises a first plurality of Fresnelized ridges;
the one surface is the second surface;
the second curve is a discontinuous curve comprising a second plurality of continuous curve portions separated by a second plurality of discontinuities; and
the second curve comprises a second plurality of Fresnelized ridges.

17. An optical assembly comprising:

the lens assembly of any of claims 1-16; and
an illumination light source arranged on the optical axis of the lens assembly, wherein the illumination light source provides illumination light incident on and through the optical assembly, wherein the illumination light from the illumination light source passing through the lens assembly is shaped into a rectangular distribution in an illumination plane normal to the optical axis, the rectangular distribution having a length in the $y$-axis direction and width in the $x$-axis direction, wherein the length is greater than the width.

18. The optical assembly of claim 17, wherein:

the rectangular distribution has a $y$-axis intensity distribution that varies by less than or equal to 50% of a minimum intensity value of the y-axis intensity distribution between outer edges of the rectangular distribution in the $y$-axis direction, and
the rectangular distribution has an $x$-axis intensity distribution that varies by less than or equal to 50% of a minimum intensity value of the y-axis intensity distribution between outer edges of the rectangular distribution in the $x$-axis direction.

19. The optical assembly of claim 17 or 18, wherein:

the rectangular distribution has a $y$-axis intensity distribution that varies by less than or equal to 34% of a maximum intensity value of the y-axis intensity distribution between outer edges of the rectangular distribution in the $y$-axis direction, and
the rectangular distribution has an $x$-axis intensity distribution that varies by less than or equal to 34% of a maximum intensity value of the y-axis intensity distribution between outer edges of the rectangular distribution in the $x$-axis direction.

20. The optical assembly of claim 17, 18 or 19, wherein:
a standard deviation of irradiance of pixels within the rectangular distribution is less than or equal to 2E-03 times a total power incident on a task plane.

FIG. 1

FIG. 2A

FIG. 2B

200

208

y

z

204

202

**FIG. 2C**

200

z

-x

202

204

206

**FIG. 2D**

FIG. 3A(i)

-z

-y

-x

300

304

308

302

306

FIG. 3A(ii)

FIG. 3B

FIG. 3C

300

-Z

X

308

304

306

302

FIG. 3D

**Detector Image: Incoherent Irradiance**

| | |
|---|---|
| 3/17/2023<br>Detector 10, NSCG Surface 1:<br>Size 100.000 W X 56.000 H Millimeters, Pixels 200 W X 200 H,<br>Total Hits = 262956<br>Peak Irradiance : 5.7922E-03 Watts/cm^2<br>Total Power : 2.6296E-01 Watts | Rob Stead<br>Stryker Endoscopy<br>Created in Zemax OpticStudio 23.1 |
| | Converx - bc zernicke FREEZE<br>20230317_1159-NONSEQ. zmx<br>Configuration 1 of 1 |

FIG. 4A

FIG. 4B

**FIG. 4C**

EP 4 707 879 A1

| Detector Image: Incoherent Irradiance | |
|---|---|
| 3/17/2023<br>Detector 10, NSCG Surface 1:<br>Size 100.000 W X 56.000 H Millimeters, Pixels 200 W X 200 H,<br>Total Hits = 27545<br>Peak Irradiance : 1.4798E-03 Watts/cm^2<br>Total Power      : 5.5090E-02 Watts | Rob Stead<br>Stryker Endoscopy<br>Created in Zemax OpticStudio 23.1 |
| | Converx - bc zernicke FREEZE<br>20230317_1159-NONSEQ. zmx<br>Configuration 1 of 1 |

FIG. 5

**Total - Illuminance Map for Incident Flux Target DETECTOR Local Coordinates**

Min:1.7541e-16, Max:5325.3, Ave:1696.5
Total Flux:15.269 lm, Flux/Emitted Flux:0.808, 8389172 Incident Rays

FIG. 6A

EP 4 707 879 A1

**FIG. 6B**

700

704

701(a)

701(b)

701(c)

701(d)

z

y

-x

**FIG. 7B**

700

702

701(a)

701(b)

701(c)

701(d)

-x

y

-z

**FIG. 7A**

700

FIG. 7C

700

FIG. 7D

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/100773 A1 (HWANG SEONG YONG [KR] ET AL) 1 May 2008 (2008-05-01) * paragraphs [0044] - [0054] * * figures 1-4, 10 * | 1-20 | INV. G02B3/02 G02B27/09 G02B19/00 F21V5/04 |
| X | CN 104 076 418 A (OCEANS KING DONGGUAN LIGHTING TECH CO LTD ET AL.) 1 October 2014 (2014-10-01) * paragraph [0026] * * figures 3, 4 * | 1-6 | ADD. G02B3/08 |
| X | CN 104 508 356 A (SHARP KK; UNIV TOHOKU NAT UNIV CORP) 8 April 2015 (2015-04-08) * paragraphs [0309], [0326] * * figures 33-34, 52-54 * | 1-6,14, 17 | |
| X | CN 104 819 389 A (SHENZHEN COMEN MEDICAL INSTR) 5 August 2015 (2015-08-05) * paragraphs [0047] - [0049], [0108] * * figures 7A-7D * | 1,2,6 | |
| A | US 2020/012019 A1 (FUKAKUSA MASAHARU [JP]) 9 January 2020 (2020-01-09) * paragraphs [0237], [0238] * * figures 18, 19 * | 15,16 | TECHNICAL FIELDS SEARCHED (IPC) G02B F21V |

The present search report has been drawn up for all claims

| Place of search | Date of completion of the search | Examiner |
|---|---|---|
| Munich | 22 January 2026 | Hillmayr, Heinrich |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 0250

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | | | Publication date | Patent family member(s) | | | Publication date |
|---|---|---|---|---|---|---|---|
| US 2008100773 | A1 | | 01-05-2008 | KR | 20080038925 | A | 07-05-2008 |
| | | | | US | 2008100773 | A1 | 01-05-2008 |
| CN 104076418 | A | | 01-10-2014 | NONE | | | |
| CN 104508356 | A | | 08-04-2015 | CN | 104508356 | A | 08-04-2015 |
| | | | | CN | 104662357 | A | 27-05-2015 |
| | | | | JP | 5901036 | B2 | 06-04-2016 |
| | | | | JP | 5901037 | B2 | 06-04-2016 |
| | | | | JP | WO2014017262 | A1 | 07-07-2016 |
| | | | | JP | WO2014017652 | A1 | 11-07-2016 |
| | | | | US | 2015167924 | A1 | 18-06-2015 |
| | | | | US | 2015211709 | A1 | 30-07-2015 |
| | | | | WO | 2014017262 | A1 | 30-01-2014 |
| | | | | WO | 2014017652 | A1 | 30-01-2014 |
| CN 104819389 | A | | 05-08-2015 | CN | 104819389 | A | 05-08-2015 |
| | | | | WO | 2016101491 | A1 | 30-06-2016 |
| US 2020012019 | A1 | | 09-01-2020 | CN | 110418917 | A | 05-11-2019 |
| | | | | JP | 7016062 | B2 | 04-02-2022 |
| | | | | JP | WO2018180950 | A1 | 06-02-2020 |
| | | | | US | 2020012019 | A1 | 09-01-2020 |
| | | | | WO | 2018180950 | A1 | 04-10-2018 |

EPO FORM P0459

For more details about this annex : see Official Journal of the European Patent Office, No. 12/82

**EP 4 707 879 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63691113